# EUROPEAN PATENT SPECIFICATION

(11) **EP 2 391 967 B1**
(45) Date of publication and mention of the grant of the patent: **03.09.2014**
(21) Application number: 10702660.1
(22) Date of filing: 29.01.2010
(51) Int. Cl.: G06F 21/32

(54) **PASSWORD PROTECTED SECURE DEVICE**
PASSWORTGESCHÜTZTE SICHERE EINRICHTUNG
DISPOSITIF SÉCURISÉ PROTÉGÉ PAR MOT DE PASSE

(30) Priority: 30.01.2009 SE 0900105
(43) Date of publication of application: 07.12.2011
(73) Proprietor: Precise Biometrics AB, 220 07 Lund (SE)
(72) Inventor: ANDERSSON, Jonas, SE-236 42 Höllviken (SE)
(74) Representative: Ström & Gulliksson AB
(86) International application number: PCT/EP2010/051114
(87) International publication number: WO 2010/086420

(56) References cited:
- EP-A1- 1 956 814
- US-A1- 2002 147 914
- Anonymous: "D32.1 - PUK Retrieval"[Online] 16 October 2009 (2009-10-16), XP002574691 VOICETRUST Retrieved from the Internet: URL:http://www.voicetrust.com/media/files/ produkt_de/D32.1-PUK-Retrieval.pdf> [retrieved on 2010-03-23]
- LAPERE MARTINE ET AL: "User Authentication in Mobile Telecommunication Environments Using Voice Biometrics and Smartcards" PROCEEDINGS. INTERNATIONAL CONFERENCE ON INTELLIGENCE IN SERVICES AND NETWORKS, XX, XX, 27 May 1997 (1997-05-27), pages 437-443, XP002106691

## Description

### Technical field

The present invention generally relates to a password protected secure device, an apparatus adapted to communicate with the password protected secure device, and a method for changing states in the password protected secure device.

### Background of the invention

Today, in order to use a mobile phone for calling, sending text messages etc. a subscription to mobile phone services is required. Usually, such a subscription is connected to a physical subscription module, which may be a so-called SIM card. By connecting a subscription to a physical subscription module it is easy to associate a subscription to a particular mobile phone.

WO 2008/074342 discloses an arrangement for secure user authentication involving a terminal with a smartcard and a peripheral device. The peripheral device is adapted to detect biometric data of a user. A secure communication channel is established between the peripheral device and the smartcard such that biometric information to be transmitted between the peripheral device and the smartcard is encrypted. The basic idea disclosed in WO 2008/074342 is to provide such an arrangement to securely store biometric information and limit tampering possibilities between the peripheral device and the smartcard. A benefit is also that the smartcard, and thus the biometric information, can be independent from the terminal and be easily portable from one terminal to another. The disclosed smartcard can be a subscriber identification module.

Traditionally, the subscription module is associated to a first user specific code, e.g. a four digit PIN code, which is input by the user when switching on the mobile phone in order to enable the mobile phone to be used for communication services. According to well known standards, if a number of incorrect user inputs have been made, the subscription module is locked and can only be unlocked by a second user specific code, e.g. a sixteen digit PUK code. By only allowing a certain number of incorrect user inputs an improved security is achieved. However, since a sixteen digit code is hard to remember for most people the second user specific code must be written down and stored, e.g. written on a note stored in a safe place.

From a user perspective as well as from a security perspective this is not a good solution. The user may loose the note with the second user specific code, which means that the user must contact the operator providing the mobile phone services or that another person may find the code. Another possible scenario is that the user stores the second user specific code in a non-safe place, which of course reduces the security significantly.

To sum up, having a first and a second user specific code as of today result in costly administration for mobile phone operators, e.g. administration associated with providing users with new codes. It is therefore a need for alternative secure subscription modules that reduce the burden of the operator and the users without reducing the security.

### Summary

In view of the above, an objective of the invention is to solve or at least reduce the problems discussed above. In particular, an objective is to provide a secure and cost-efficient solution for handling passwords in a password protected secure device, e.g. a subscription module.

According to a first aspect a password protected secure device having an associated password is provided, The secure device is being in a state chosen from a group of states comprising an unlocked state, a first locked state and a second locked state, wherein said state changes from said first locked state to said unlocked state if a user input which matches said password is received, and wherein said state changes from said first locked state to said second locked state if a predetermined number of user inputs which do not match said password are received, said password protected secure device further comprising a receiver for receiving biometric sample data, a memory comprising biometric template data, and a processor configured to compare said biometric sample data with said biometric template data, wherein a match between said biometric sample data and said biometric template data causes said secure device to provide information for changing said secure device from a first state to a second state, wherein one of said first state and said second state is said second locked state.

An advantage is that a second password, such as PUK code, may be replaced by biometric data, which has the positive effect that the security is increased and that the user does not have to remember, for example, a 16 digit PUK code.

The password protected secure device may further comprise a biometry application module and a lock state application module, wherein the biometry application module comprises the memory comprising biometric template data and the processor configured to compare said biometric sample data with said biometric template data, and is arranged to cause the lock state application module to perform the provision of information enabling change of said password protected device from the first state to the second state.

An advantage of this is an internal and secure mechanism for unlocking the second locked state.

The provided information may be used in the secure device to change the state, and/or the provided information may be transmitted to an external unit and displayed to a user. The group of states may further comprise a set password state.

An advantage of this is that information for changing the state of the secure device from the second locked state to the set password state may be provided.

The password may be a first password and said secure device may further be associated with a second password, wherein said state changes from said first locked state to said unlocked state if a user input which matches said first password is received and wherein said state changes from said second locked state to said set password state if a user input which matches said second password is received. The first state may be the second locked state. Further, the first state may be the second locked state and the second state may be the set password state.

An advantage of this is that the secure device in the second locked state may be reset by using biometric data.

Further, as another option, the first state may be the unlocked state and the second state may be the second locked state.

An advantage of this is that the secure device in the unlocked state may be locked by using biometric data. This may be advantageous if the secure device is lost or stolen.

The secure device may be a card, such as a smart card. The password may be a PIN-code. The smart card, also called chip card or integrated circuit card, may be an entity with embedded integrated circuits which can process data and store data, and may have abilities for contact or contactless communication with an apparatus benefitting security features of the smart card, and/or with a reader or acquisition device for capturing biometric samples.

The biometric sample may be a representation of a fingerprint, e.g. a digital image of a part of a finger of a user, or extracted features from an image of a part of a finger of a user, e.g. minutiae or structured data of minutiae, frequency, phase and/or quality parameters, etc.

According to a second aspect a system comprising a secure device according to the first aspect and an apparatus adapted to communicate with the secure device is provided. The apparatus comprises a biometric sensor for recording biometric sample data, a transmitter for transmitting said biometric sample data to said secure device.

The transmitter may be adapted to transmit said biometric sample data via the internet. The transmitter may further be adapted to transmit said biometric sample data via a mobile communications network.

Additionally, the apparatus may comprise a receiver for receiving information from said secure device. The information may be the second password, which enables said state change from said second locked state to said set password state, such that the second password can be provided to a subscription module. The apparatus may further comprise a secure element holding a password container from which the second password is accessible only upon receiving the information from the secure device such that the second password can be provided to a subscription module. Here, the secure element may be a memory location anywhere in the system. For the case where the memory location is outside a secure memory area of the secure device, the password is preferably encrypted such that the information is used for decrypting the password. For the case where the memory location is inside the secure memory area of the secure device, no encryption is needed since the storage is inherently safe. Moreover, apparatus may be adapted to communicate with said secure device via a communication terminal.

An advantage of this is that in a situation where the secure device is placed in the communication terminal, the apparatus and the secure device may communicate via a mobile communications network, which has the positive effect that data, such as biometric data, can be sent over long distances. The communication terminal may be a mobile phone.

According to a third aspect a method for providing information for changing state of a password protected secure device having an associated password is provided. The secure device is in a state chosen from a group of states comprising an unlocked state, a first locked state or a second locked state, wherein said state changes from said first locked state to said unlocked state if a user input which matches said password is received, and wherein said state changes from said first locked state to said second locked state if a predetermined number of user inputs which do not match said password are received, said method comprising the steps of receiving biometric sample data, comparing said biometric sample data with biometric template data which is stored in a memory on said secure device, and providing information for changing said state from a first state to a second state, if said biometric sample data matches said biometric template data, wherein one of said first state and said second state is said second unlocked state.

The comparing may be performed in a biometry application module and the changing of state may be performed in a lock state application module. The biometry application module may comprise the memory comprising biometric template data and a processor comparing said biometric sample data with said biometric template data, and may cause the lock state application module to perform the provision of information enabling change of said password protected device from the first state to the second state.

The method may further comprise the step of using said information for changing said state from said first state to said second state. Further, the first state can be said second locked state. Moreover, the first state can said unlocked state and said second state can be said second locked state. Additionally, the method may comprise transmitting said information from the password protected secure device to an external unit, and receiving a second password from the external unit to the password protected secure device enabling entering said unlocked state, which second password is generated based on the transmitted information. Alternatively, the information can be a second password. Thus, the returned code, i.e. the second password, may be identical to the transmitted information. An advantage of any such approach is that compatibility can be achieved with existing gear in the environment in which the secure device is intended to operate.

Other objectives, features and advantages of the present invention will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, wherein:
Fig. 1 illustrates a general overview of a communications system.
Fig. 2 illustrates a general overview of another communications system.
Fig. 3 illustrates a general overview of a subscription module having biometric matching functionality.
Fig. 4 is a state diagram illustrating how states of a mobile phone can be related to different passwords.
Fig. 5 is another state diagram illustrating how states of a mobile phone can be related to different passwords.
Fig. 6 presents a flowchart illustrating a method for facilitating the procedure of providing a second password to a user.
Fig. 7 presents a flowchart illustrating a method for changing the state of a mobile phone from a second locked state to a set first password state.
Fig. 8 presents a flowchart illustrating a method for changing the state of a mobile phone from a second locked state to an unlocked.
Fig. 9 presents a flowchart illustrating a method for changing the state of a mobile phone from an unlocked state to a second locked state.
Fig. 10 illustrates a system comprising a computer, a biometric reader and a subscription module.
Fig. 11 illustrates a password protected secure device and an apparatus adapted to communicate with the password protected secure device.
Fig. 12 presents a flowchart illustrating a method for providing information for changing state of a password protected secure device.

### Detailed description of preferred embodiments

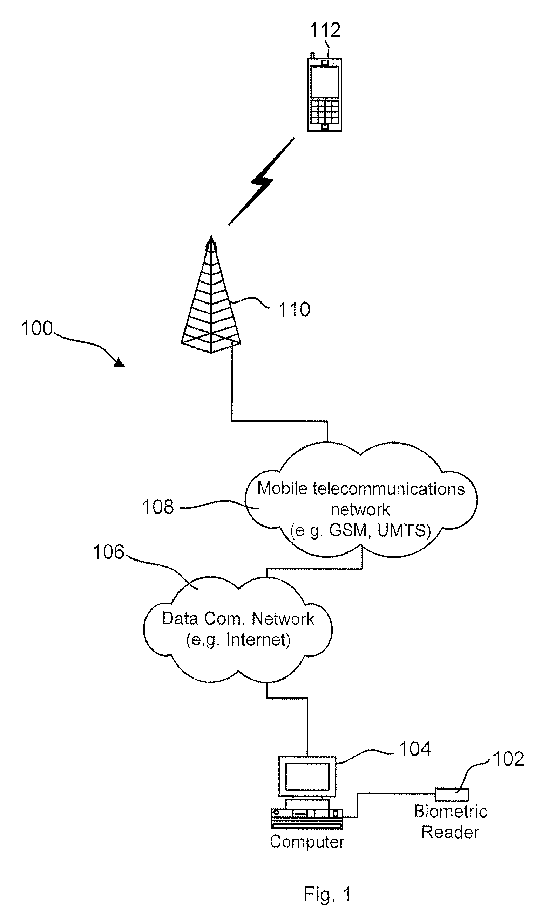

Generally, Fig. 1 illustrates a general overview of a communications system 100 to which a biometric reader 102 has been added. The biometric reader 102, which may be a fingerprint sensor, is connected to a computer 104. The connection between the biometric reader 102 and the computer 104 may be a wired connection or a wireless connection. Alternatively, the biometric reader 102 may be an integral part of the computer 104. The computer 104 may be an ordinary desktop computer, as illustrated, but can also be an apparatus specifically made for this purpose. Hence, the wording computer 102 should in this context be understood as a device having data processing capability, which can be connected to data communications network 106 and which can be connected to a biometric reader 102, or, alternatively, having a built-in biometric reader 102.

The data communications network 106 may be connected to a mobile telecommunications network 108, e.g. GSM, UMTS, which implies that the biometric reader 102 may be connected via a base station 110 to a mobile communication terminal 112. An implication of having the biometric reader 102 connected to the mobile phone 112 is that biometric data may be utilised in mobile phones.

Alternatively, instead of using the mobile communications network 108, a near field radio communications interface, such as BlueTooth™, may be used.

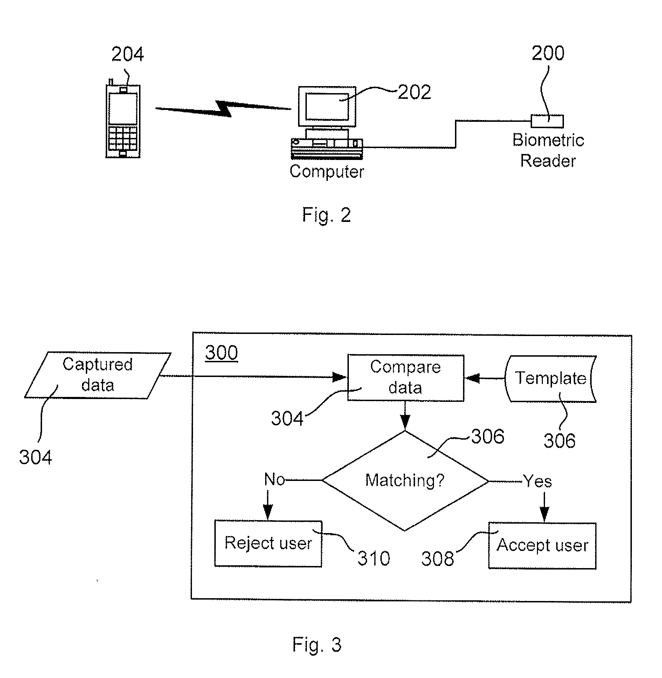

Fig. 2 illustrates an example of such a solution. A biometric reader 200 is connected, by a wired connection or by a wireless connection, to a computer 202. The computer 202 is in turn connected to a mobile phone 204 via a wireless connection, such as BlueTooth™.

Alternatively, the computer 202 and the mobile phone 204 may be connected by a wired connection, such as a USB cable.

The mobile phone 112/204 is in turn connected to a subscription module. The subscription module may be a replaceable module, that is, the module may be switched from one mobile phone to another. An example of such a subscription module is a SIM card. Alternatively, the module may be fixed mounted in the mobile phone, which means that the subscription module can not be switched from one mobile phone to another.

Regardless if the subscription module is a replaceable module or a fixed mounted module, the subscription module may be adapted to receive and process biometric data, to store a biometric template, and to output a verification signal indicating if the received biometric data match the biometric template. Further, if the subscription module is replaceable, that is, not fixed mounted in the mobile phone, the subscription module may be adapted to function with other apparatuses, that is, not only with the mobile phone.

Another example is where the subscription module is used with a computer, e.g. of laptop type, for providing access to wireless wide area network or other subscribed services using a subscription module for securely authenticating a user. Following this, the subscription module can be used in the apparatus having the biometric reader if the biometric reader is integrated with the computer. For the mobile phone case, it is also possible that the mobile phone can be able to have a biometric reader integrated, and the similar situation applies. Thus, configuration of physical entities can take different forms, but the functional principles demonstrated herein still apply to them.

Fig. 3 illustrates a general overview of the functionality of a subscription module 300 having biometric matching functionality. The subscription module 300 may be a so-called smart card, that is a card with a built-in processor and memory enabling match-on-card™ functionality.

Biometric data, herein referred to as captured data 302, captured by e.g. the biometric reader 102/200 is input to the subscription module 300. The captured data 302 is compared 304 to a biometric template 306. If it is determined that the captured data 302 and the template 304 match 306, the user is accepted 308, otherwise the user is rejected 310. Thus, an advantage of having biometric matching capability on a subscription module 300 is that biometric data may be utilised in order to verify that a current user is the user signed to the subscription. The template 306 may be loaded onto a memory of the subscription module 300 when the subscription module is sold, e.g. by utilising a fingerprint reader and a card writer.

As described above, a subscription module can be associated to a first password, such as a PIN code, and a second password, such as PUK code.

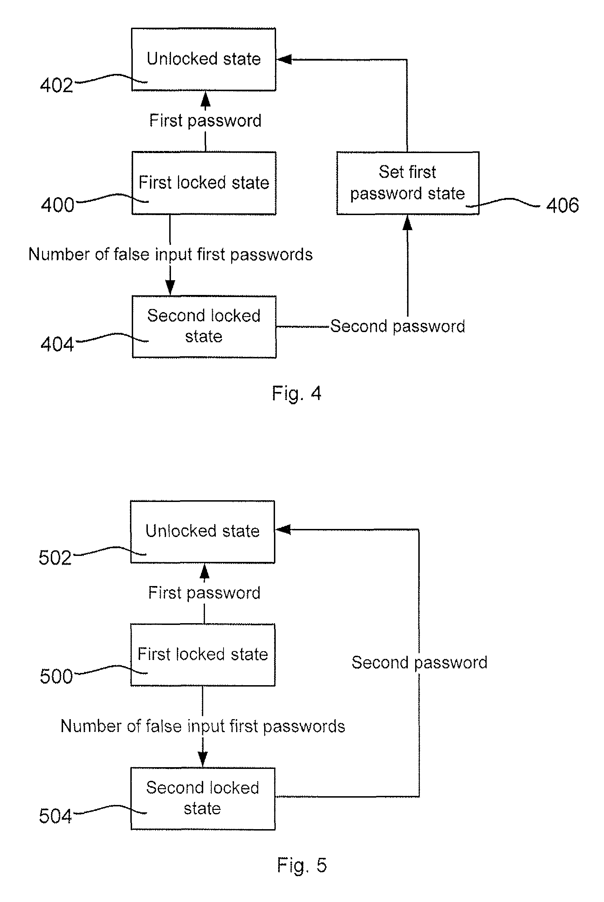

Fig. 4 illustrates an example of how these codes may be related to different states of the mobile phone. When switching on the mobile phone, the mobile phone enters a first locked state 400, In order to unlock the mobile phone, that is, to enter the unlocked state 402, a first password is to be entered, e.g. entering a PIN code. On the other hand, if a number of false passwords is input the mobile phone enters a second locked state 404. In order to leave the second locked state 404 a second password is to be entered. In this example, if a second password is entered, the mobile phone enters a set first password state 406. In this state the user may be requested to enter a new first password. After the first password is changed, the mobile phone leaves the set first password state and enters the unlocked state 402.

Fig. 5 illustrates another example of how these codes may be related to the different states of the mobile phone. In this example, the mobile phone enters a first locked state 500 when the mobile phone is switched on. If a correct first password is input, the mobile phone enters an unlocked state 502. On the other hand, if a number of false first passwords is input, the mobile phone enters a second locked state 504. Unlike the example illustrated in Fig. 4, if a second password is entered when the mobile phone is in the second locked state 504, the mobile phone enters the unlocked state 502. In association to this the first password may be displayed on the screen of the mobile phone, or alternatively that a text message is sent to the mobile phone.

When combining the use of biometric data in mobile phones as e.g. illustrated in Figs 1, 2 and 3 with the different security states as illustrated in Figs 4 and 5, secure, user friendly and cost-efficient solutions may be achieved. For instance, by replacing the second password with biometric verification, less time and money have to be spent on lost second passwords.

Alternatively, the second password may be complemented with biometric verification functionality. In other words, the mobile phones may be used as today, but with the extra option that biometric data may be used as an alternative to the second password.

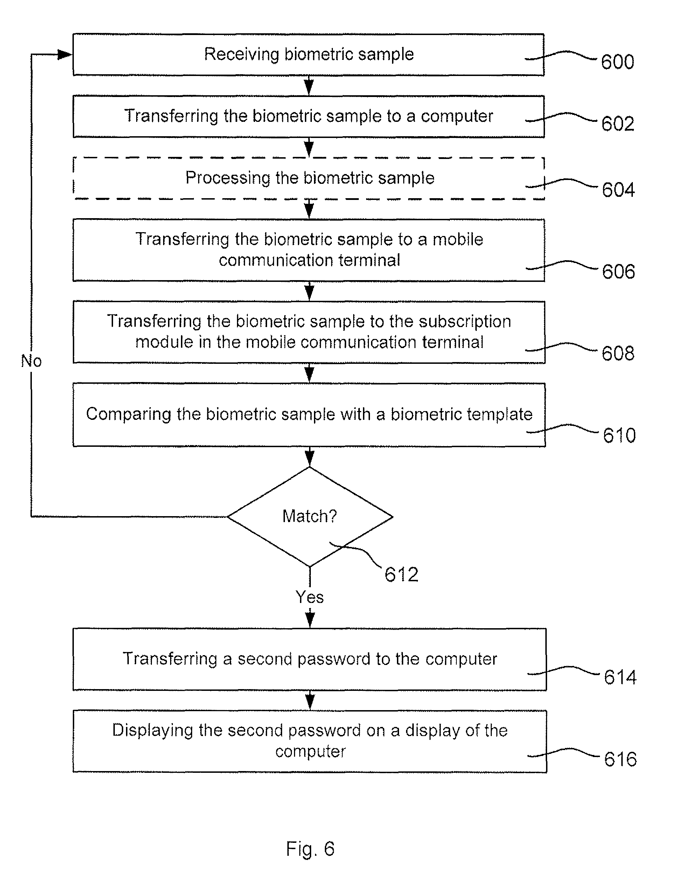

Fig. 6 presents a flowchart illustrating a method for facilitating the procedure of providing a second password to a user by using biometric data. First a biometric sample is received 600 by a biometric reader. Next, the biometric sample is transferred 602 to a computer. Optionally, the biometric sample is processed 604 by the computer. Such processing may for instance result in that less data has to be transferred, or that the biometric sample is adapted in such a way that less calculations has to be performed in the subscription module. Thereafter, the biometric sample is transferred 606 to a mobile communication terminal. As described, the computer may be in direct contact with the mobile communication terminal, or the computer may communicate with the mobile communications terminal via a data network and/or via a mobile communications network. After the biometric data is received by the mobile phone the data is further transferred 608 to the subscription module. Thereafter, the biometric data is compared 610 with a template stored in the subscription module. If the biometric data and the template match 612 a second password, which can be stored in a memory in the subscription module, can be transferred 614 to the computer via the mobile phone. In order to provide the user with the second password, this can be displayed 616 on a display of the computer.

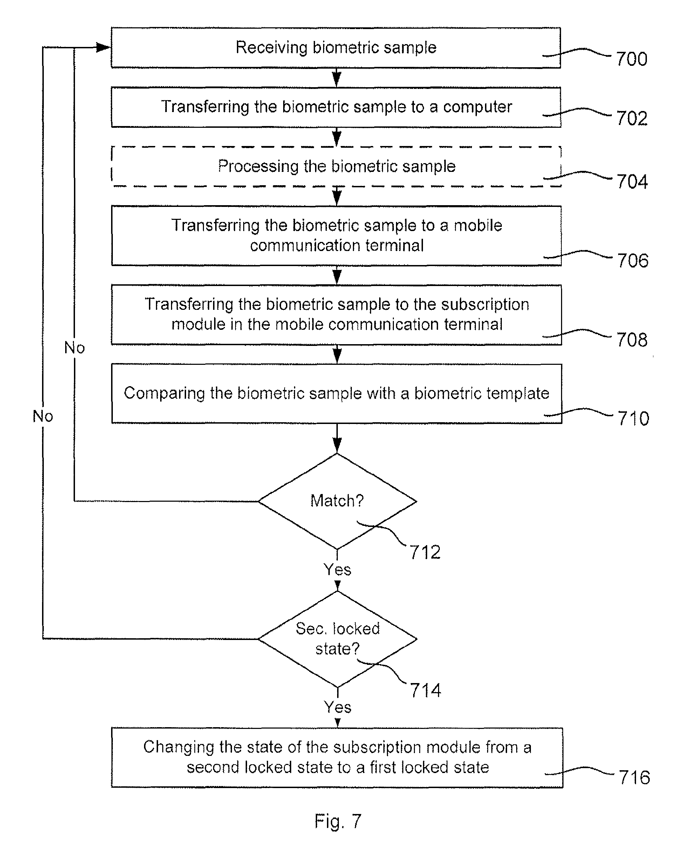

Fig. 7 presents a flowchart illustrating a method for changing the state of a mobile phone from a second locked state to a set first password state by using biometric data.

First a biometric sample is received 700 by using a biometric reader. Thereafter the biometric sample is transferred 702 to a computer. Optionally, the computer processes 704 the biometric sample in order to reduce the amount of data or in order to reduce the number of calculations needed in a comparison with a template. Next, the biometric data is transferred 706 to a mobile communication terminal, and then, in turn, the biometric sample is transferred 708 from the mobile communication terminal to a subscription module. In the subscription module, the biometric sample is compared 710 with the biometric template. If the biometric sample and the biometric template are determined to match 712 and if the mobile phone is in a second locked state 714, the mobile phone changes 716 from the second locked state to a set first password state. That is, instead of or as an alternative to entering a second password a biometric sample is input.

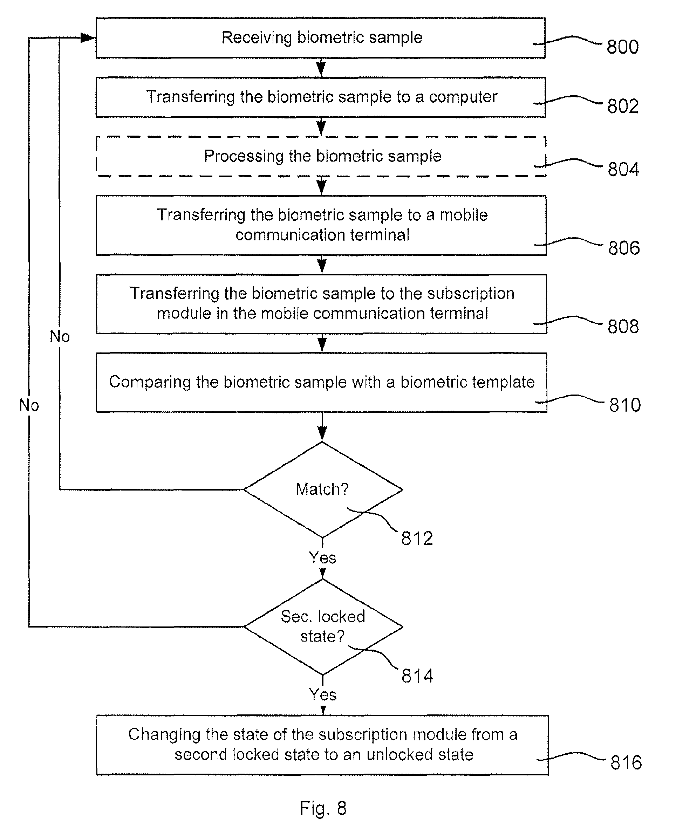

Fig. 8 presents yet another flowchart illustrating a method for changing the state of a mobile phone from a second locked state to an unlocked state by using biometric data.

First a biometric sample is received 800 by using a biometric reader. Thereafter the biometric sample is transferred 802 to a computer. Optionally, the computer processes 804 the biometric sample in order to reduce the amount of data or in order to reduce the number of calculations needed in a comparison with a template. Next, the biometric data is transferred 806 to a mobile communication terminal, and then, in turn, the biometric sample is transferred 808 from the mobile communication terminal to a subscription module. In the subscription module, the biometric sample is compared 810 with the biometric template. If the biometric sample and the biometric template are determined to match 812 and if the mobile phone is in a second locked state 814, the mobile phone changes 816 from the second locked state to an unlocked state.

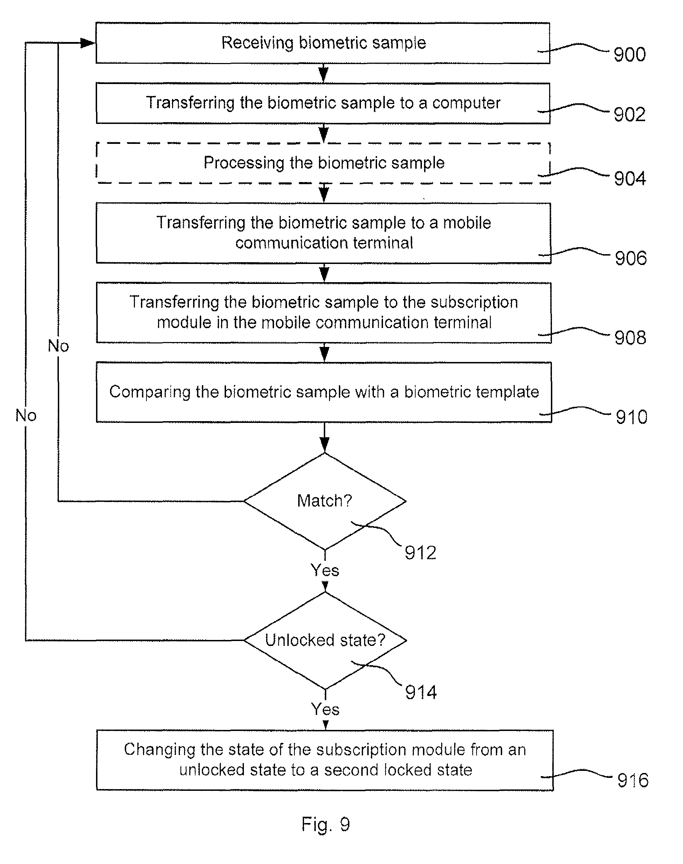

Fig. 9 presents a flowchart illustrating a method for changing the state of a mobile phone from an unlocked state to a second locked state by using biometric data.

First a biometric sample is received 900 by using a biometric reader. Thereafter the biometric sample is transferred 902 to a computer. Optionally, the computer processes 904 the biometric sample in order to reduce the amount of data or in order to reduce the number of calculations needed in a comparison with a template. Next, the biometric data is transferred 906 to a mobile communication terminal, and then, in turn, the biometric sample is transferred 908 from the mobile communication terminal to a subscription module. In the subscription module, the biometric sample is compared 910 with the biometric template. If the biometric sample and the biometric template are determined to match 912 and if the mobile phone is in a second locked state 914, the mobile phone changes 916 from the unlocked state to a second locked state.

Thus, for example, if the mobile phone is stolen, the user may set the phone in a second locked state by enrolling and sending his fingerprint to the subscription module. Alternatively, instead of changing state from the unlocked state to the second locked state, it is possible to change from the unlocked state to the first locked state.

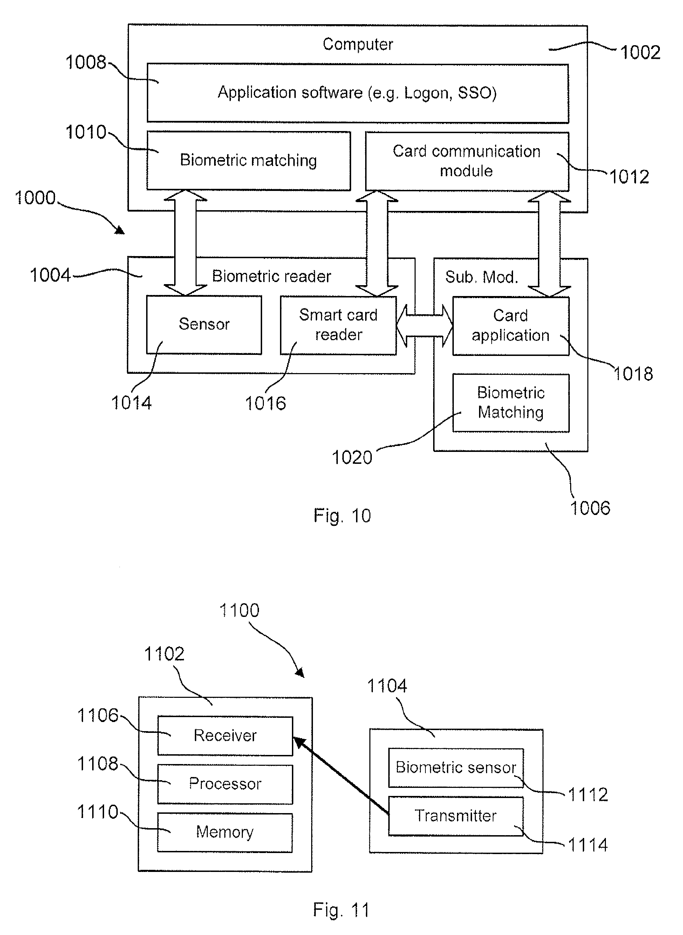

Instead of communicating via a mobile phone, the subscription module can communicate directly with the biometric reader. A general overview of one embodiment in which the subscription module communicate directly with the biometric reader is illustrated in Fig. 10.

A system 1000 according to this embodiment can comprise a computer 1002 connected to a biometric reader 1004 and to a subscription module 1006. The computer 1002 comprises in turn application software 1008, a biometric matching module 1010 and a card communication module 1012. The biometric matching module 1010 can be configured to communicate with a sensor 1014 of the biometric reader 1004, and the card communication module 1012 can be configured to communicate with a smart card reader 1016 of the biometric reader 1004 as well as with a card application 1018 of the subscription module 1006. The subscription module 1006 can also comprise a biometric matching module 1016. The biometric matching module 1010 of the computer 1002 and the biometric matching module 1020 of the subscription module 1006 can be configured to cooperate, e.g. the biometric matching module 1010 of the computer 1002 can be configured to pre-process the biometric data before it is transmitted to the subscription module 1006. Moreover, the card application 1018 may also communicate directly with the biometric reader 1004 by utilising the smart card reader 1016.

The card application 1018 and the biometric matching 1020 may be in the form of a JAVA^{™} Applet, and the subscription module may further comprise a JAVA^{™} Virtual Machine (JVM).Fig. 11 illustrates a system 1100 comprising a password protected secure device 1102, which can be a subscription module, and an apparatus 1104 adapted to communicate with the password protected secure device 1102. As described above, the apparatus may be a computer. The password protected secure device 1102 can comprise a receiver configured to receive biometric sample data, a processor adapted to match the received biometric sample data with biometric template data stored in a memory 1110. The apparatus 1104 can comprise a biometric sensor 1112 adapted to capture the biometric sample data, and a transmitter 1114 adapted to transmit the biometric sample data to the password protected secure device 1102.

From a functional point of view in any of the systems demonstrated above, the card application can comprise a biometry application module handling the biometric matching and a lock state application module handling the lock states. The biometry application module can involve or comprise the memory comprising the biometric template data and the processor configured to compare said biometric sample data with said biometric template data. Here, "processor" should be construed functionally, and may be part of processing abilities of for example a general processing device of the subscription module 1006/1102. The biometry application module is arranged to cause the lock state application module to perform the provision of information for changing said password protected device from the first state to the second state upon a match between the biometric sample and the biometric template.

The change of lock state can be performed according to a number of configurations. One configuration can be that the lock state module effects the change of states by itself. Another configuration can be that the lock state module interacts with another application module within the subscription module 1006/1102 for effecting the change of states. Further another configuration can be that the lock state module effects the change of states by interacting with the terminal or computer, possibly via a further application module within the subscription module 1006/1102. In the latter case, an example can be that the biometry application module receives the biometric sample, compares it with the biometric template, provides a control signal to the lock state application module upon match, and the lock state application module provides the appropriate information, e.g. password such as a PUK code, to the terminal or computer 1002 which returns the information to the subscription module 1006 such that the change of lock states is effected. The returning of the information from the terminal or computer 1002 can be implemented by a program or application, e.g. applet, therein. Alternatively, the password is presented to a user of the mobile phone, terminal or computer such that the user is able to type in the correct password. As a further alternative, the information is conveyed all the way to a user or even to a communication service provider, i.e. network operator, who returns means for changing the lock state. The means can be providing an access code or an applet, or the password is presented to a user of the mobile phone, terminal or computer such that the user is able to type in the correct password.

In one embodiment, the password can be saved on the subscription module, e.g. a PUK code saved on a SIM card, preferably in a protected memory area, such that a password container is available in the locked state by the biometry unlocking mechanism. Thus, the biometric matching mechanism should be available in the locked state. By the biometric approach disclosed herein, the password container is accessible only upon match such that the password can be provided to other applications in the subscription module, or to the mobile phone, terminal or computer to be returned as demonstrated above.

In another embodiment, the password is saved in a separate secure element of the mobile phone, terminal or computer holding the subscription module. Thereby, biometric matching and access based thereon to the secure element will be available in a locked state. By the biometric approach disclosed herein, a password container of the separate secure element is accessible upon match such that the password can be provided to the subscription module, or to the mobile phone, terminal or computer to be returned as demonstrated above, with or without further aid by the user.

The embodiments demonstrated above each provides for machine aided provision of unlocking instead of the traditional administrative way of providing unlock codes or new subscription module and codes via registered mail, still providing secure unlocking.

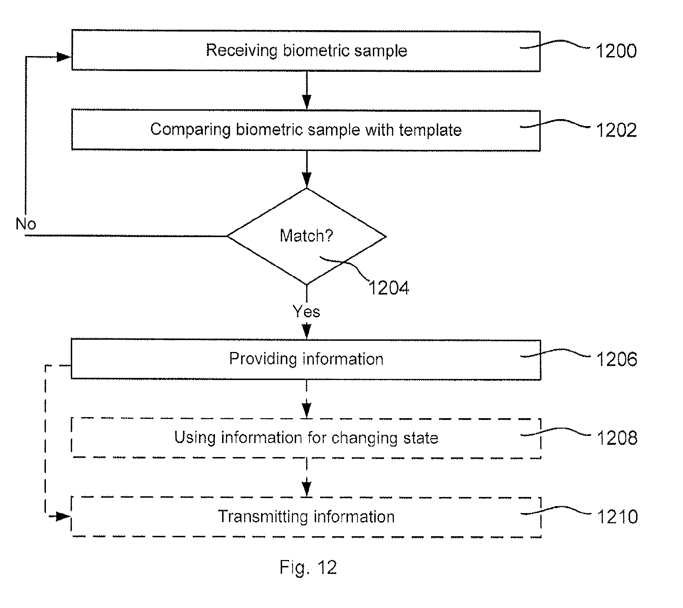

Fig. 12 presents a flowchart illustrating a method for providing information for changing state of the password protected secure device. In a first step 1200, a biometric sample data is received. Then, in a second step 1204, the biometric sample data is compared with biometric template data. If the biometric sample data and the biometric template data match 1204, information for changing state is provided in step 1206.

Optionally, in step 1208, the information for changing state, which can be a second password, can be used to change the state of the password protected device. For instance, if the received biometric sample data is deter mined to match the biometric template data and if the password protected secure device is in a second locked state, the provided information can be used to change the state from the second locked state to a set first password state.

Optionally, as another alternative, in step 1210, the information may be transmitted to an external unit, such as the apparatus transmitting the biometric sample data. An advantage of transmitting the information to the external unit is that the information may be displayed to the user by using the external unit.

Optionally, as yet another alternative, the information may be used in order to change the state 1208 and the information may be transmitted to the external unit 1210.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A password protected secure device having an associated password, said secure device being in a state chosen from a group of states comprising an unlocked state, a first locked state and a second locked state, wherein said state changes from said first locked state to said unlocked state if a user input which matches said password is received, and wherein said state changes from said first locked state to said second locked state if a predetermined number of user inputs which do not match said password are received, **characterized in that** said password protected secure device comprising
a receiver for receiving biometric sample data,
a memory comprising biometric template data, and
a processor configured to compare said biometric sample data with said biometric template data,
wherein a match between said biometric sample data and said biometric template data causes said secure device to provide information for changing said password protected device from a first state to a second state, wherein one of said first state and said second state is said second locked state.

2. The password protected secure device according to claim 1, comprising a biometry application module and a lock state application module, wherein the biometry application module comprises the memory comprising biometric template data and the processor configured to compare said biometric sample data with said biometric template data, and is arranged to cause the lock state application module to perform the provision of information enabling change of said password protected device from the first state to the second state.

3. The password protected secure device according to claim 1 or 2, wherein said group of states further comprises a set password state, and said password is a first password and wherein said secure device further is associated with a second password, wherein said state changes from said first locked state to said unlocked state if a user input which matches said first password is received and wherein said state changes from said second locked state to said set password state if a user input which matches said second password is received.

4. The password protected secure device according to anyone of the preceding claims, wherein said secure device is a card.

5. A system comprising a secure device according to any of claims 1 to 4and an apparatus adapted to communicate with the secure device according to anyone of the preceding claims, the apparatus comprising
a biometric sensor for recording biometric sample data, and
a transmitter for transmitting said biometric sample data to said secure device.

6. The system according to claim 10, wherein said transmitter is adapted to transmit said biometric sample data via the internet, and/ or
via a mobile communications network.

7. The system according to anyone of claims 5 or 6, further comprising a receiver for receiving information from said secure device.

8. The system according to claim 7, wherein said information is a second password, the second password enabling said state change from said second locked state to said set password state, such that the second password can be provided to a subscription module.

9. The system according to claim 7, further comprising a secure element holding a password container from which the second password is accessible only upon receiving the information from the secure device such that the second password can be provided to a subscription module.

10. The system according to anyone of claims 5 to 9, wherein said apparatus communicates with said secure device via a communication terminal.

11. The system according to claim 10, wherein said communication terminal is a mobile phone.

12. A method for providing information for changing state of a password protected secure device having an associated password, said secure device being in a state chosen from a group of states comprising an unlocked state, a first locked state or a second locked state, wherein said state changes from said first locked state to said unlocked state if a user input which matches said password is received, and wherein said state changes from said first locked state to said second locked state if a predetermined number of user inputs which do not match said password are received, **characterized in that** said method comprising the steps of
receiving biometric sample data,
comparing said biometric sample data with biometric template data which is stored in a memory on said secure device,
providing information for changing said state from a first state to a second state, if said biometric sample data matches said biometric template data, wherein one of said first state and said second state is said second unlocked state.

13. The method according to claim 12, wherein the comparing is performed in a biometry application module and the changing of state is performed in a lock state application module, wherein the biometry application module comprises the memory comprising biometric template data and the processor comparing said biometric sample data with said biometric template data, and causing the lock state application module to perform the provision of information enabling change of said password protected device from the first state to the second state.

14. The method according to claim 12 or 13, further comprising
transmitting said information from the password protected secure device to an external unit, and
receiving a second password from the external unit to the password protected secure device enabling entering said unlocked state, which second password is generated based on the transmitted information.

15. The method according to claim 14, wherein said information is the second password.

## Patentansprüche

1. Passwortgeschützte sichere Einrichtung, die ein zugeordnetes Passwort besitzt, wobei die sichere Einrichtung sich in einem Zustand befindet, der aus einer Gruppe von Zuständen ausgewählt wird, die einen entsperrten Zustand, einen ersten gesperrten Zustand und einen zweiten gesperrten Zustand umfasst, wobei der Zustand aus dem ersten gesperrten Zustand in den entsperrten Zustand wechselt, wenn eine Benutzereingabe empfangen wird, welche mit dem Passwort übereinstimmt, und wobei der Zustand aus dem ersten gesperrten Zustand in den zweiten gesperrten Zustand wechselt, wenn eine vorgegebene Anzahl von Benutzereingaben empfangen wird, welche nicht mit dem Passwort übereinstimmen, **dadurch gekennzeichnet, dass** die passwortgeschützte sichere Einrichtung aufweist:
einen Empfänger zum Empfangen biometrischer Abtastdaten,
einen Datenspeicher, der biometrische Musterdaten enthält, und
einen Prozessor, der dazu ausgebildet ist, die biometrischen Abtastdaten mit den biometrischen Musterdaten zu vergleichen,
wobei eine Übereinstimmung zwischen den biometrischen Abtastdaten und den biometrischen Musterdaten die sichere Einrichtung veranlasst, Informationen zum Wechseln der passwortgeschützten Einrichtung aus einem ersten Zustand in einen zweiten Zustand bereitzustellen, wobei einer vom ersten Zustand und zweiten Zustand der zweite gesperrte Zustand ist.

2. Passwortgeschützte sichere Einrichtung nach Anspruch 1, die ein biometrisches Applikationsmodul und ein Sperrzustand-Applikationsmodul aufweist, wobei das biometrische Applikationsmodul den Datenspeicher, der biometrische Musterdaten enthält, und den Prozessor, welcher zum Vergleichen der biometrischen Abtastdaten mit den biometrischen Musterdaten ausgebildet ist, aufweist, und so angeordnet ist, dass er das Sperrzustand-Applikationsmodul veranlasst, die Bereitstellung von Informationen auszuführen, die den Wechsel der passwortgeschützten Einrichtung aus dem ersten Zustand in den zweiten Zustand ermöglichen.

3. Passwortgeschützte sichere Einrichtung nach Anspruch 1 oder 2, wobei die Gruppe von Zuständen des Weiteren einen eingestellten Passwortzustand aufweist und das Passwort ein erstes Passwort ist und wobei der sicheren Einrichtung des Weiteren ein zweites Passwort zugeordnet ist, wobei der Zustand aus dem ersten gesperrten Zustand in den entsperrten Zustand wechselt, wenn eine Benutzereingabe empfangen wird, welche mit dem ersten Passwort übereinstimmt, und wobei der Zustand aus dem zweiten gesperrten Zustand in den eingestellten Passwortzustand wechselt, wenn eine Benutzereingabe empfangen wird, welche mit dem zweiten Passwort übereinstimmt.

4. Passwortgeschützte sichere Einrichtung nach einem beliebigen der vorhergehenden Ansprüche, wobei die sichere Einrichtung eine Platine ist.

5. System, das eine sichere Einrichtung nach einem beliebigen der Ansprüche 1 bis 4 und eine Vorrichtung aufweist, die mit der sicheren Einrichtung nach einem beliebigen der vorhergehenden Ansprüche zu kommunizieren vermag, wobei die Vorrichtung aufweist:
einen biometrischen Sensor zum Aufzeichnen biometrischer Abtastdaten, und
einen Sender zum Übertragen der biometrischen Abtastdaten zur sicheren Einrichtung.

6. System nach Anspruch 10, wobei der Sender dazu eingerichtet ist, die biometrischen Abtastdaten über das Internet und / oder
über ein Mobilfunknetz zu übertragen.

7. System nach einem der Ansprüche 5 oder 6, das des Weiteren einen Empfänger zum Empfangen von Informationen von der sicheren Einrichtung aufweist.

8. System nach Anspruch 7, wobei die Information ein zweites Passwort ist und das zweite Passwort es gestattet, dass der Zustand aus dem zweiten gesperrten Zustand so in den eingestellten Passwortzustand wechselt, dass das zweite Passwort einem Indizierungsmodul zur Verfügung gestellt werden kann.

9. System nach Anspruch 7, das des Weiteren ein sicheres Element aufweist, welches einen Passwort-Container bereithält, aus dem das zweite Passwort nur dann zugänglich ist, wenn Informationen von der sicheren Einrichtung so empfangen werden, dass das zweite Passwort einem Indizierungsmodul zur Verfügung gestellt werden kann.

10. System nach einem beliebigen der Ansprüche 5 bis 9, wobei die Vorrichtung mit der sicheren Einrichtung über ein Datenübertragungsendgerät kommuniziert.

11. System nach Anspruch 10, wobei das Datenübertragungsendgerät ein Mobiltelefon ist.

12. Verfahren zum Bereitstellen von Informationen zum Wechseln des Zustands einer passwortgeschützten sicheren Einrichtung, die ein zugeordnetes Passwort besitzt, wobei die sichere Einrichtung sich in einem Zustand befindet, der aus einer Gruppe von Zuständen ausgewählt wird, die einen entsperrten Zustand, einen ersten gesperrten Zustand oder einen zweiten gesperrten Zustand umfasst, wobei der Zustand aus dem ersten gesperrten Zustand in den entsperrten Zustand wechselt, wenn eine Benutzereingabe empfangen wird, welche mit dem Passwort übereinstimmt, und wobei der Zustand aus dem ersten gesperrten Zustand in den zweiten gesperrten Zustand wechselt, wenn eine vorgegebene Anzahl von Benutzereingaben empfangen wird, welche nicht mit dem Passwort übereinstimmen, **dadurch gekennzeichnet, dass** das Verfahren folgende Schritte aufweist:
Empfangen biometrischer Abtastdaten,
Vergleichen der biometrischen Abtastdaten mit biometrischen Musterdaten, die in einem Datenspeicher auf der sicheren Einrichtung gespeichert sind,
Bereitstellen von Informationen zum Wechseln des Zustandes aus einem ersten Zustand in einen zweiten Zustand, wenn die biometrischen Abtastdaten mit den biometrischen Musterdaten übereinstimmen, wobei einer vom ersten Zustand und zweiten Zustand der zweite entsperrte Zustand ist.

13. Verfahren nach Anspruch 12, wobei das Vergleichen in einem biometrischen Applikationsmodul ausgeführt wird und das Wechseln des Zustands in einem Sperrzustand-Applikationsmodul ausgeführt wird, wobei das biometrische Applikationsmodul den Datenspeicher, der biometrische Musterdaten enthält, und den Prozessor aufweist, welcher die biometrischen Abtastdaten mit den biometrischen Musterdaten vergleicht, und das Sperrzustand-Applikationsmodul veranlasst, die Bereitstellung von Informationen auszuführen, die den Wechsel der passwortgeschützten Einrichtung aus dem ersten Zustand in den zweiten Zustand ermöglichen.

14. Verfahren nach Anspruch 12 oder 13, das des Weiteren umfasst:
Senden der Informationen von der passwortgeschützten sicheren Einrichtung zu einer externen Einheit, und
Empfangen eines zweiten Passworts von der externen Einheit an die passwortgeschützte sichere Einrichtung, was das Eintreten in den entsperrten Zustand ermöglicht, wobei das zweite Passwort auf der Grundlage der gesendeten Informationen erzeugt wird.

15. Verfahren nach Anspruch 14, wobei die Information das zweite Passwort ist.

## Revendications

1. Dispositif sécurisé protégé par mot de passe, possédant un mot de passe associé, ledit dispositif sécurisé étant dans un état sélectionné dans un groupe d'états comprenant un état déverrouillé, un premier état verrouillé et un second état verrouillé, dans lequel ledit état passe dudit premier état verrouillé audit état déverrouillé si une saisie par l'utilisateur correspondant audit mot de passe est reçue, et dans lequel ledit état passe dudit premier état verrouillé audit second état verrouillé si un nombre prédéterminé de saisies par l'utilisateur qui ne correspondent pas audit mot de passe est reçu, **caractérisé en ce que** ledit dispositif sécurisé protégé par mot de passe comprend :
un récepteur destiné à recevoir des données d'échantillons biométriques ;
une mémoire contenant des données de gabarits biométriques ; et
un processeur configuré pour comparer lesdites données d'échantillons biométriques et lesdites données de gabarits biométriques ;
dans lequel une correspondance entre lesdites données d'échantillons biométriques et lesdites données de gabarits biométriques amène ledit dispositif sécurisé à fournir des informations permettant audit dispositif protégé par mot de passe de passer d'un premier état à un second état, l'un desdits premier et second états étant ledit second état verrouillé.

2. Dispositif sécurisé protégé par mot de passe selon la revendication 1, comprenant un module applicatif de biométrie et un module applicatif de verrouillage de l'état, dans lequel le module applicatif de biométrie inclut la mémoire contenant des données de gabarits biométriques et le processeur configuré pour comparer lesdites données d'échantillons biométriques et lesdites données de gabarits biométriques, et est conçu pour amener le module applicatif de verrouillage de l'état à exécuter la fourniture d'informations permettant audit dispositif protégé par mot de passe de passer du premier état au second état.

3. Dispositif sécurisé protégé par mot de passe selon la revendication 1 ou 2, dans lequel ledit groupe d'états comprend en outre un état de mot de passe renseigné, et ledit mot de passe est un premier mot de passe et ledit dispositif sécurisé étant en outre associé à un second mot de passe, dans lequel ledit état passe dudit premier état verrouillé audit état déverrouillé si une saisie par l'utilisateur qui correspond au premier mot de passe est reçue et dans lequel ledit état passe dudit second état verrouillé audit état de mot de passe renseigné si une saisie par l'utilisateur qui correspond au second mot de passe est reçue.

4. Dispositif sécurisé protégé par mot de passe selon l'une quelconque des revendications précédentes, ledit dispositif sécurisé étant une carte.

5. Système comprenant un dispositif sécurisé selon l'une quelconque des revendications 1 à 4 et un appareil conçu pour communiquer avec le dispositif sécurisé selon l'une quelconque des revendications précédentes, l'appareil comprenant :
un capteur biométrique destiné à enregistrer des données d'échantillons biométriques ; et
un émetteur destiné à émettre lesdites données d'échantillons biométriques vers ledit dispositif sécurisé.

6. Système selon la revendication 10, dans lequel ledit émetteur est conçu pour émettre lesdites données d'échantillons biométriques via l'internet et/ou via un réseau de communication mobile.

7. Système selon l'une quelconque de la revendication 5 ou 6, comprenant en outre un récepteur destiné à recevoir des informations en provenance dudit dispositif sécurisé.

8. Système selon la revendication 7, dans lequel lesdites informations sont un second mot de passe, le second mot de passe permettant ledit changement d'état entre ledit second état verrouillé et ledit état de mot de passe renseigné, si bien que le second mot de passe peut être fourni à un module d'abonnement.

9. Système selon la revendication 7, comprenant en outre un élément sécurisé incluant un conteneur de mot de passe à partir duquel le second mot de passe n'est accessible qu'après que les informations ont été reçues du dispositif sécurisé, si bien que le second mot de passe peut être fourni à un module d'abonnement.

10. Système selon l'une quelconque des revendications 5 à 9, dans lequel ledit appareil communique avec ledit dispositif sécurisé via un terminal de communication.

11. Système selon la revendication 10, dans lequel ledit terminal de communication est un téléphone mobile.

12. Procédé de fourniture d'informations afin de modifier l'état d'un dispositif sécurisé protégé par mot de passe possédant un mot de passe associé, ledit dispositif sécurisé étant dans un état sélectionné dans un groupe d'états comprenant un état déverrouillé, un premier état verrouillé et un second état verrouillé, dans lequel ledit état passe dudit premier état verrouillé audit état déverrouillé si une saisie par l'utilisateur correspondant audit mot de passe est reçue, et dans lequel ledit état passe dudit premier état verrouillé audit second état verrouillé si un nombre prédéterminé de saisies par l'utilisateur qui ne correspondent pas audit mot de passe est reçu, **caractérisé en ce que** ledit procédé comprend les étapes consistant à :
recevoir des données d'échantillons biométriques ;
comparer lesdites données d'échantillons biométriques avec des données de gabarits biométriques qui sont stockées dans une mémoire sur ledit dispositif sécurisé ;
fournir des informations pour passer d'un premier état à un second état, si lesdites données d'échantillons biométriques correspondent auxdites données de gabarits biométriques, l'un desdits premier et second états étant ledit second état verrouillé.

13. Procédé selon la revendication 12, dans lequel la comparaison est effectuée dans un module applicatif de biométrie et le changement d'état est effectué dans un module applicatif de verrouillage de l'état, dans lequel le module applicatif de biométrie inclut la mémoire contenant des données de gabarits biométriques et le processeur comparant lesdites données d'échantillons biométriques et lesdites données de gabarits biométriques et amenant le module applicatif de verrouillage de l'état à exécuter la fourniture d'informations permettant audit dispositif protégé par mot de passe de passer du premier état au second état.

14. Procédé selon la revendication 12 ou 13, comprenant en outre les étapes consistant à :
émettre lesdites informations entre le dispositif sécurisé protégé par mot de passe et une unité extérieure ; et
recevoir un second mot de passe de l'unité d'extérieure par le dispositif sécurisé protégé par mot de passe, pour lui permettre de passer dans ledit état déverrouillé, ledit second mot de passe étant produit en fonction des informations transmises.

15. Procédé selon la revendication 14, dans lequel lesdites informations sont le second mot de passe.
